Europäisches Patentamt

European Patent Office

Office européen des brevets

(11) Publication number: **0 089 936**
**B1**

# (12) EUROPEAN PATENT SPECIFICATION

(45) Date of publication of patent specification: **13.08.86**

(21) Application number: **83850058.5**

(22) Date of filing: **11.03.83**

(51) Int. Cl.⁴: **B 60 K 25/08,** B 60 K 17/34,
B 60 K 17/36

| | |
|---|---|
| (54) **Drive roller arrangement.** | (73) Proprietor: **AB Zetterbergs Mek. Verkstad**<br>**Box 5**<br>**S-740 46 Östervaala (SE)** |
| (30) Priority: **16.03.82 SE 8201650** | |
| | (72) Inventor: **Blomqvist, Hakan**<br>**Forsells Väg 6**<br>**S-740 46 Östervala (SE)** |
| (43) Date of publication of application:<br>**28.09.83 Bulletin 83/39** | |
| (45) Publication of the grant of the patent:<br>**13.08.86 Bulletin 86/33** | (74) Representative: **Grennberg, Erik Bertil et al**<br>**H ALBIHNS PATENTBYRA AB Box 7664**<br>**S-103 94 Stockholm (SE)** |
| (84) Designated Contracting States:<br>**AT DE FR GB NL** | |
| (56) References cited:<br>**GB-A-1 461 547**<br>**SE-B- 302 890**<br>**US-A-1 897 944** | |

Courier Press, Leamington Spa, England.

## Description

The invention relates to a drive roller arrangement with a drive roller which can be engaged and disengaged with a driven and a non-driven wheel in a vehicle, and comprising a first shaft fixed in the vehicle, two upper arms pivotable about said first shaft by means of a hydraulic cylinder, two forearms pivotable in elbow bearings at the free ends of the upper arms, said drive roller being rotatably mounted on a second shaft which is attached to the free ends of the forearms, forced guidance means being disposed, when the upper arms swing from the engagement position, to fold the forearms towards the upper arms. Such devices are already known.

Drive roller arrangements with drive rollers are previously known e.g. from US—A—1.897.944, SE—B—302.890 and GB 1.461.547, and have been extensively sold by us under the name "Robson Drive". Two such drive arrangements are mounted on either side of a truck for example, making it possible when engaged to transmit drive force from the wheel pair driven by the engine and the transmission to the non-driven wheel pair. When driving on difficult surfaces, e.g. transporting lumber in the forest, traction can be increased appreciably, thus reducing the risk of becoming stuck.

In the known design of a drive roller arrangement, shown in SE—B—302.890, the forearms, in the disengaged position, hang with their roller straight down from the elbow bearing. This is no particular disadvantage if there is plenty of space for mounting the arrangement, and if the forearms can be made short. Otherwise there is the risk that the roller will swing against one of the vehicle wheels. To eliminate this disadvantage, we have made and sold units where forced guidance means have been arranged so that when the upper arm is swung upwards, the forearm is forced upwards, thus further retracting it and the roller attached thereto. This attempt to achieve a more compact arrangement has, however, the disadvantage that the elbow joint may become stuck because of thickening of the grease in the bearing and/or ice, snow and frozen dirt preventing the movement of the elbow joint. There is thus the risk that when the roller is moved downwards, it will end up so high on one of the wheels that it will not engage both wheels.

It is a purpose of the invention to achieve a drive roller arrangement which is more compact and still does not have the disadvantages mentioned, and which is suitable for installation even where the space is limited. It is desirable to have the smallest possible displacement, preferably limited only by the length of stroke of the vehicle wheel suspension, since the drive roller arrangement is normally fixed to the suspended portions of the vehicle.

These purposes are achieved according to the invention by a construction of the aforementioned type which is characterized in that a forearm is provided at the elbow bearing with a projection which points substantially directly away from the drive roller shaft and is of sufficient length so that when the upper arm moves towards the engagement position, it comes into contact with an abutment, thus actuating the forearm so as to fold it out, whereby, and due to the pivoting of the projection and the forearm rigidly joined thereto about the elbow bearing, the projection is moved out of the way and can clear the abutment. This avoids the disadvantage of having the elbow joint stick, and thus having the roller, when moving towards engagement, only engage one of the wheels high up on the wheel, so that the wheel rotation, prevents the drive roller from engaging both of the vehicle wheels.

In accordance with an especially preferred embodiment, said forced guide means consist in that at least one of the forearms is provided with a guide surface which is non-parallel to the line connecting the second shaft and the elbow bearing, and that a deflector fixed to the vehicle, preferably identical with said abutment, is mounted outside the circular arc which the elbow bearing describes as the upper arm pivot and is disposed during said pivot movement to interact with the guide surface and swing the forearm to a non-vertical position in towards the upper arms.

According to another preferred embodiment, a second abutment is fixed to the vehicle inside the circular arc described by the elbow bearing during the pivot movement of the upper arm and is disposed in the disengaged position of the drive roller arrangement, to abut against said forearm on the opposite side to the deflector, so that the forearm becomes fixed between the second abutment and the deflector.

In order to obtain a construction which is as compact as possible, and especially to avoid the necessity of having the first shaft pass through the entire vehicle and be common to the drive roller arrangements on both sides of the vehicle, it is suitable that each drive roller arrangement be made very stable, so that the first shaft can be fixed at a high location therein and so that the drive roller arrangement can be fastened to a vehicle chassis points substantially lower than the first shaft. It is then suitable to place a vehicle-fixed and essentially downwardly directed girder means adjacent to the vehicle chassis but with the first shaft fixed to its upper portion. This girder can be a U-girder or two parallel plates welded together at the upper and lower ends, with the hydraulic cylinder being suitably mounted with one end at the lower end of the girder means and partially enclosed therein, and actuating a lever rigidly fixed to the upper arms and pivotable about the first shaft and forming an obtuse angle with the upper arms. Thus very compact arrangements are obtained, so that two mirror-reversed drive roller arrangements can be mounted on either side of a vehicle using only the lower portion of the vehicle frame, which can be suitably reinforced with tie-rods fixed in the girder means.

The invention will now be described in more detail with reference to the figures. Fig. 1 shows a drive roller arrangement with the drive roller in engagement with two vehicle tires (only partially indicated). Fig. 2 shows an inner pair of arms in a drive roller arrangement according to one embodiment of the invention in which the drive roller (not shown) is retracted upwards. Fig. 3 shows schematically an alternative embodiment, showing the inventive function. Figs. 4 and 5 show prospective views of a drive roller arrangement.

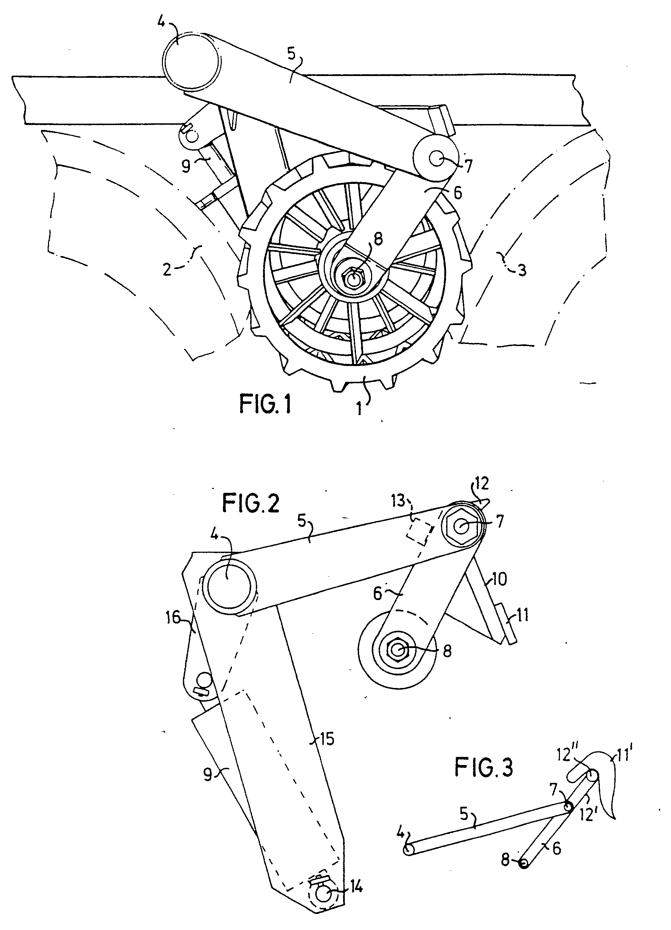

The drive roller 1 shown in Fig. 1 is disposed in an operative position between two vehicle wheels, of which only portions of the tires are visible. The roller 1 is freely rotatably mounted on a shaft 8 which is fixed at both ends in arms 6, the outer one of which is visible in the figure. These forearms 6 are mounted via elbow bearings 7 on the free ends of the upper arms 5, which are in turn pivotally mounted on a shaft 4 fixed to the vehicle.

As can be seen even more clearly in Fig. 2, the arm 5 can rotate about the shaft 4 with the aid of a hydraulic cylinder 9 via a lever 16 rigidly joined to the arm 5. By actuation by the hydraulic cylinder 9, the elbow bearing 7 and with it the bearing 8 of the drive roller can be moved downwards to the engagement position shown in Fig. 1.

It should be noted that the required downward forces on the roller 1 to achieve the desired coupling between the wheels 2 and 3 are considerable. It has therefore previously been usual to have the forces from the drive rollers, which are mounted on either side of the vehicle, be absorbed by a rather thick shaft 4 mounted in the vehicle and passing through it. However, this shaft must be rather highly placed, and in accordance with a preferred embodiment, a shaft 4 is therefore arranged on each side of the vehicle. In order to achieve the required force absorption and still achieve a sufficiently high placement of the shaft 4, one can proceed as follows. The end of the shaft 4 pointing towards the vehicle is provided with a U-girder, half of which is shown as 15 in Fig. 2. The distance between these halves is 15—20 cm, and they are joined at the top at the shaft 4 and at the bottom at a shaft 14. The inner half is fixed to the vehicle chassis. The chassis is reinforced by a pair of through-tie-rods at different heights, which join the inner halves on either side to each other. It is thus possible to absorb the forces pressing on the rollers, which will act as bending forces on the shafts 4, and thus there is no need of having a shaft passing transversely through the vehicle as highly placed as the shafts 4

The hydraulic cylinder 9 and the lever 16 are arranged between the two parallel U-girder legs.

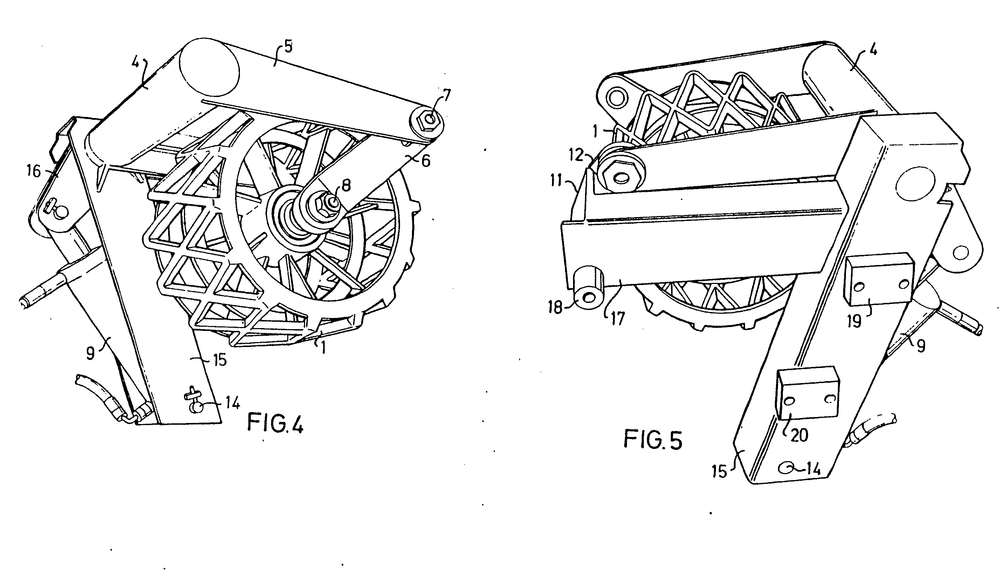

Figs. 4 and 5, in which the same reference numerals have been used as in the other figures, reveal this arrangement even more clearly, showing a drive roller arrangement in perspective, in the former from the outside, in the latter from the side facing the vehicle. The U-girder 15 is welded to another girder 17 into a stable frame which is capable of holding the shaft 4 fixed therein. Mounting points 18, 19 and 20 are arranged for fastening to the vehicle frame. It is suitable to arrange through-tie-rods fixed to the points 19 and 20 and to corresponding points on a reversed drive roller arrangement on the opposite side of the vehicle frame.

In the retracted position, which is shown in Fig. 2 it is evident that the arms 6 (only the inner one of which is shown in the Figure) can be swung upwards towards the upper arms 5. This is achieved by the interaction between a projection fixed to the inner forearm 6, and having a guide surface 10 which forms an angle with the longitudinal direction of the forearm 6, and a deflector 11 fixed to the vehicle. This deflector must be placed so that the elbow joint clears it when the upper arm 5 is swung downwards.

To prevent the upper arm 5 and the forearm 6 from remaining at the same angle as shown in Fig. 2, when the upper arm is swung downwards (this can be caused by the bearing 7 becoming stuck because of lubricant thickening or cold) the forearm is provided with a projection 12. This is placed so that when the upper arm is swung downwards, the projection 12 will hook the deflector 11 and continued swinging down of the upper arm 5 will cause the elbow joint to unfold. This guarantees that the drive roller will actually come into engagement against both of the vehicle wheels and not end up in a high position only in contact with one of the wheels, in which case the movement of the wheel could easily prevent engagement in the correct position. If the forearms 6 end up in such a position that the shaft 8 is above a straight line joining the elbow bearing 7 and the vehicle wheel shaft, it will be entirely impossible to place the drive roller in place, even if the vehicle is stationary, and if the vehicle is rolling, this will further displace the critical point downwards. The design with the projection 12 interacting with the deflector 11 prevents such mishaps.

An abutment 13 fixed to the vehicle is arranged so that when the system is in the retracted position, the forearm 6 will be pressed between the fixed elements 11 and 13. Thus the forearm 6 will be fixed against rotation in either direction about the shaft 7.

It is preferable, but not entirely necessary, to have the deflector 11 serve both to deflect the forearm 6 during retraction and to fold out the forearm 6 during engagement. A number of alternative solutions are, however, possible, for example the solution shown schematically in Fig. 3, in which the functions of the guide surface 10 and the projection 12 have been assumed by the projection 12' which is an extension of the arm 6, while the vehicle-fixed deflector 11 has been replaced by a "fork cam" 11', so constructed that the projection 12' with a roller 12'' interacts therewith during retraction and is taken into its fork, and which then causes the desired unfolding for engagement of the roller. It is obvious that the person skilled in the art, after studying the invention, can suggest a variety of alternative and equivalent solutions to the problems solved by the invention.

The invention provides a drive roller arrangement which is quite compact, and therefore it is possible to equip even special trucks with it, which was previously impossible due to lack of space. The older and previously known drive roller arrangements have primarily been used in lumber trucks which are often driven on poor forest roads where the risk of becoming stuck is considerable. A larger portion of the vehicle park can now enjoy the advantages of drive rollers by virtue of the invention.

**Claims**

1. Drive roller arrangement with a drive roller (1), which can be engaged and disengaged with a driven and a non-driven wheel (2, 3) in a vehicle, and comprising a first shaft (4) fixed in the vehicle, two upper arms (5) pivotable about said first shaft by means of a hydraulic cylinder (9), two forearms (6) pivotable in elbow bearings (7) at the free ends of the upper arms, said drive roller (1) being rotatably mounted on a second shaft (8), which is attached to the free ends of the forearms, forced guidance means being disposed, when the upper arms swing from the engagement position, to fold the forearms (6) towards the upper arms, characterized in that a forearm (6) is provided at the elbow bearing with a projection (12) which points substantially directly away from the drive roller shaft (8) and is of sufficient length so that when the upper arm (5) moves towards the engagement position it comes into contact with an abutment (11), thus actuating the forearm (5) so as to fold it out, whereby, and due to the pivoting of the projection and the forearm (5) rigidly joined thereto about the elbow bearing (7), the projection is moved out of the way and can clear the abutment (11).

2. Drive roller arrangement according to Claim 1, characterized in that said forced guidance means consist in that at least one of the forearms (6) is provided with a guide surface (10) which is non-parallel to the line connecting the second shaft (8) and the elbow bearing (7), and that a deflector fixed to the vehicle, preferably identical to said abutment (11), is mounted outside the circular arc described by the elbow bearing (7) as the upper arm (5) pivots, and is disposed during said pivot movement to interact with the guide surface and swing the forearms (6) to a non-vertical position in towards the upper arms (5).

3. Drive roller arrangement according to Claim 1 or 2, characterized in that a second abutment (13) is fixed to the vehicle inside the circular arc described by the elbow bearing (7) during the pivot movement of the upper arm (5) and is disposed, in the disengaged position of the drive roller arrangement, to abut against said forearm (6) on the opposite side to said deflector (11), so that the forearm (6) becomes fixed between the second abutment (13) and the deflector (11).

4. Drive roller arrangement according to one of the preceding claims, characterized in that the hydraulic cylinder (9) is mounted between, on the one hand, a first pivot bearing (14), which is mounted at the lower end of a downwardly directed supporting arm (15) fixed to the vehicle and to the first shaft (4), and, on the other hand, a lever (16) rigidly joined to the upper arms (5) and pivotable about the first shaft (4) and forming an obtuse angle with the upper arms.

**Patentansprüche**

1. Treibrollenanordnung mit einer Treibrolle (1), die mit einem angetriebenen und einem nicht getriebenen Rad (2, 3) eines Fahrzeuges in und außer Eingriff gebracht werden kann, mit einer im Fahrzeug befestigten ersten Welle (4), zwei Oberarmen (5), die um diese erste Welle mittels eines hydraulischen Zylinders (9) schwenkbar sind, zwei Unterarmen (6), die an den freien Enden der Oberarme in Ellbogenlagern (7) schwenkbar sind, wobei die Treibrolle (1) auf einer an den freien Enden der Unterarme angebrachten zweiten Welle (8) drehbar begestigt ist und Zwangsführungen vorgesehen sind, um beim Ausschweknen der Oberarme aus der Eingriffsstellung die Unterarme (6) auf die Oberarme zu zu klappen, dadurch gekennzeichnet, daß ein Unterarm (6) am Ellbogenlager mit einem im wesentlichen direkt von der Treibrollenwelle (8) abweisenden Vorsprung (12) hinreichender Länge versehen ist, der bei der Bewegung des Oberarmes (5) in die Eingriffsstellung mit einem Anschlag (11) in Eingriff kommt und dadurch den Unterarm (6) im Ausklappsinn betätigt, wobei der Vorsprung beim geminsamen Schwenken mit dem mit ihm starr verbundenen Unterarm (5) um das Ellbogenlager (7) aus dem Weg verstellt wird und vom Anschlag (11) freikommt.

2. Treibrollenanordnung nach Anspruch 1, dadurch gekennzeichnet, daß für die Zwangsführung wenigstens einer der Unterarme (6) mit einer Führungsfläche (10) versehen ist, die aparallel zu der die zweite Welle (8) und das Ellbogenlager (7) verbindenden Linie ist und daß ein am Fahrzeug befestigter, vorzugsweise mit dem Anschlag (11) identischer Ableiter, der außerhalb des vom Ellbogenlager (7) beim Schwenken des Oberarmes (5) beschriebenen Kreisbogens angeordnet ist, während dieser Schwenkbewegung im Zusammenwirken mit der Führungsfläche die Unterarme (6) in eine von der Vertikallage abweichende Stellung in Richtung auf die Oberarme (5) zu einschwenkt.

3. Treibrollenanordnung nach Anspruch 1 oder 2, dadurch gekennzeichnet, daß am Fahrzeug innerhalb des vom Ellbogenlager (7) während der Schwenkbewegung des Oberarmes (5) beschriebenen Kreisbogens ein zweiter Anschlag (13) befestigt ist, der in der außer Eingriff befindlichen Stellung der Treibrollenanordnung an der vom Ableiter (11) abweisenden Seite des Unterarmes (6) anschlägt, so daß der Unterarm (6) zwischen dem zweiten Anschlag (13) und dem Ableiter (11) gehalten wird.

4. Treibrollenanordnung nach einem der vorhergehenden Ansprüche, dadurch gekennzeichnet, daß der hydraulische Zylinder (9) zwischen einem ersten Schwenklager (14), welches am unteren Ende eines nach unten gerichteten, am Fahrzeug befestigten Stützarmes (15) angebracht ist, einerseits und anderseits einem Hebel (16) montiert ist, der starr mit den Oberarmen (5) verbunden und um die erste Welle (4) schwenkbar ist und mit den Oberarmen einen stumpfen Winkel einschließt.

## Revendications

1. Agencement de rouleau entraîneur comprenant un rouleau entraîneur (1), qui peut être engagé et dégagé avec une roue entraînée et une roue non entraînée (2, 3) dans un véhicule, et comportant un premier arbre (4) fixé au véhicule, deux bras supérieurs (5) pivotant autour dudit premier arbre au moyen d'un vérin hydraulique (9), deux leviers (6) pivotant dans des genouillères (7) aux extrémités libres des bras supérieurs, ledit rouleau entraîneur (1) étant monté à rotation sur un second arbre (8) qui est fixé aux extrémités libres des leviers, des moyens de guidage forcés étant prévus, lorsque les bras supérieurs basculent depuis la position d'engagement, pour replier les leviers (6) vers les bras supérieurs, caractérisé par le fait qu'un levier (6) est prévu à la genouillère avec une saillie (12) pointant sensiblement directement à l'écart de l'arbre (8) du rouleau entraîneur et de longueur suffisante pour que, lorsque le bras supérieur (5) se déplace vers la position d'engagement, elle vienne en contact avec une butée (11) actionnant ainsi le levier (6) de manière à le déplier ce par quoi, et du fait du pivotement de la saillie et du levier (6) solidaire de celle-ci autour de la genouillère (7), la saillie est déplacée hors du trajet et peut libérer la butée (11).

2. Agencement de rouleau entraîneur selon la revendication 1, caractérisé par le fait que lesdits moyens de guidage forcés consistent en ce que, au moins l'un des leviers (6) est pourvu d'une surface de guidage (10) qui n'est pas parallèle à la ligne reliant le second arbre (8) et la genouillère (7), et qu'un déflecteur fixé au véhicule, de préférence identique à ladite butée (11) est monté à l'extérieur de l'arc de cercle décrit par la genouillère (7) lorsque le bras supérieur (5) pivote et est disposé au cours du mouvement de pivotement de manière à interagir avec la surface de guidage et basculer les leviers (6) vers une position non verticale en direction des bras supérieurs (5).

3. Agencement de rouleau entraîneur selon la revendication 1 ou 2, caractérisé par le fait qu'une seconde butée (13) est fixée au véhicule à l'intérieur de l'arc-de-cercle décrit par la genouillère (7) au cours du mouvement de pivotement du bras supérieur (5) et est disposée dans la position dégagée de l'agencement de rouleau entraîneur pour buter contre ledit levier (6) sur le côté opposé dudit déflecteur (11) de telle sorte que le levier (6) se trouve fixé entre la seconde butée (13) et le déflecteur (11).

4. Agencement de rouleau entraîneur selon l'une des revendications précédentes, caractérisé par le fait que le vérin hydraulique (9) est monté entre d'une part, un premier palier de pivotement (14) qui est monté à l'extrémité inférieure d'un bras de support (15) dirigé vers le bas et fixé au véhicule et au premier arbre (4) et d'autre part, un levier (16) solidaire des bras supérieurs (5) et pivotant autour du premier arbre (4) et formant un angle obtus avec les bras supérieurs.

FIG.1

FIG.2

FIG.3

FIG.5

FIG.4